# EUROPÄISCHE PATENTANMELDUNG

(11) **EP 4 488 152 A2**
(43) Veröffentlichungstag der Anmeldung: **08.01.2025**
(21) Anmeldenummer: 24186019.6
(22) Anmeldetag: 02.07.2024
(51) Int. Cl.: B62J 7/04, B62J 15/02

(54) **FAHRRAD MIT EINEM RADSCHÜTZER SOWIE RADSCHÜTZER**

(30) Priorität: 03.07.2023 DE 102023117500
(71) Anmelder: MPR GmbH & Co. KG, 95615 Marktredwitz (DE)
(72) Erfinder: Grimmig, Fabien, 95615 Marktredwitz (DE); Nagin, Wilhelm, 95448 Bayreuth (DE); Budnik, Martin, 95706 Schirnding (DE); Grethmann, Jonas, 39108 Magdeburg (DE)
(74) Vertreter: Friderichs, Gunther

(57) **Zusammenfassung**

Die Offenbarung betrifft ein Fahrrad mit einem Radschützer. Der Radschützer weist eine Nut auf, in der ein mit dem Rahmen verbundenes Gleitelement verschiebbar angeordnet ist. Das Gleitelement ist durch Anziehen eines Sicherungsmittels, insbesondere einer Schraube, in der Nut festlegbar.

## Beschreibung

### Gebiet der Erfindung

Die Erfindung betrifft ein Fahrrad mit einem Radschützer sowie einen Radschützer für ein Fahrrad. Weiter betrifft die Erfindung einen Gepäckträger für ein Fahrrad sowie ein mit dem Gepäckträger ausgestattetes Fahrrad.

### Hintergrund der Erfindung

Aus der Praxis sind verschiedene Arten der Befestigung für Radschützer, insbesondere am Hinterrad eines Fahrrads, bekannt. Insbesondere bei Radschützern, welche nicht ab Werk bereits am Fahrrad verbaut sind, ist eine einfache Montage des Radschützers wünschenswert, es sollte insbesondere nicht erforderlich sein, das Hinterrad auszubauen.

Aus der Offenlegungsschrift DE 10 2020 122 100 A1 ist ein Befestigungssystem bekannt, welches einen Adapter umfasst, der an der Sitzstrebenbrücke des Fahrrads montierbar ist. Über mit dem Adapter verbindbare Distanzstücke können Form- und Lagetoleranzen auf einfache Weise ausgeglichen werden.

Diese Distanzstücke können auch bei bereits eingebautem Radschützer eingesetzt werden.

Eine nachträgliche Montage des Radschützers ist mit diesem System aber in der Regel nicht möglich, ohne das Hinterrad zumindest auszuhängen.

### Aufgabe der Erfindung

Der Erfindung liegt demgegenüber die Aufgabe zugrunde, die Montage eines Radschützers weiter zu vereinfachen. Eine weitere Aufgabe der Erfindung ist es, die Montage eines optional ebenfalls montierten Gepäckträgers ebenfalls weiter zu verbessern.

### Zusammenfassung der Erfindung

Die Aufgabe der Erfindung wird bereits durch ein Fahrrad mit einem Radschützer, durch einen Radschützer, durch einen Gepäckträger sowie durch eine Anordnung mit einem ersten und einem zweiten Fahrradrahmen nach einem der unabhängigen Ansprüche gelöst.

Bevorzugte Ausführungsformen und Weiterbildungen der Erfindung sind dem Gegenstand der abhängigen Ansprüche, der Beschreibung sowie den Zeichnungen zu entnehmen.

Die Erfindung betrifft ein Fahrrad mit einem Radschützer. Der Radschützer ist insbesondere am Hinterrad des Fahrrads angeordnet.

Unter einem Fahrrad im Sinne der Erfindung werden auch solche mit einem elektrischen Hilfsantrieb, also E-Bikes und Pedelecs, verstanden.

Das Fahrrad umfasst einen Radschützer, welcher eine Nut umfasst. In der Nut ist ein mit dem Rahmen verbundenes Gleitelement verschiebbar angeordnet.

Über das Gleitelement ist die Winkelposition des Radschützers veränderbar. So lässt sich das Montagesystem auf Form- und Lagetoleranzen anpassen. Es ist insbesondere vorgesehen, dass sich das Gleitelement um zumindest 10°, vorzugsweise 20° des Umfangs des Radschützers verschieben lässt.

Über das Gleitelement wird der Radschützer insbesondere an der Sitzstrebenbrücke und/oder am Mittelbau des Fahrrads befestigt.

Das Gleitelement ist durch Anziehen eines Sicherungsmittels in der Nut festlegbar. Das Sicherungsmittel kann insbesondere als Schraube ausgebildet sein.

Es ist insbesondere vorgesehen, dass das Sicherungsmittel durch einen am Fahrrad montierbaren Halter geführt ist, welcher durch Festziehen des Sicherungsmittels gegen das Gleitelement verspannt wird.

Der Radschützer kann so auf einfache Weise in seine endgültige Montageposition festgelegt werden.

Bei einer Weiterbildung der Erfindung umfasst der Radschützer eine Innenschiene, in welcher die Nut angeordnet ist. Die Innenschiene kann beispielsweise aus Metall oder Kunststoff ausgebildet sein.

Die Innenschiene kann integraler Bestandteil des Radschützers sein, insbesondere kann der Radschützer als ein einziges Spritzgussteil einschließlich der Innenschiene ausgebildet sein.

Die Innenschiene kann auch als separates Teil aus Kunststoff oder Metall ausgebildet sein, welches mit dem restlichen Radschützer verbunden oder umspritzt ist.

Die Nut in der Innenschiene kann T-förmig ausgebildet sein, wobei ein offenes Ende des T-förmigen Profils nach außen zeigt. Durch diesen durch die Basis des T gebildeten Schlitz kann das Sicherungsmittel, insbesondere die Schraube geführt sein. Dementsprechend kann die Innenschiebe einen im Wesentlichen rechteckigen Querschnitt mit einem auf einer Langseite mittig angeordneten Schlitz aufweisen. Durch den Schlitz kann die Schraube in das Gleitelement greifen. Das Gleitelement kann einen Fortsatz mit einem Gewinde aufweisen, wobei der Fortsatz durch den Schlitz greift. Der Fortsatz dient so zugleich der Führung des Gleitelements in der Innenschiene.

Auf der Innenschiene angeordnet kann ein Außenteil angeordnet sein, welches das Profil des Radschützers bildet. In dem Außenteil befindet sich ein Langloch, wodurch eine Verschiebbarkeit des Gleitelements sichergestellt ist.

Bei einer Ausführungsform der Erfindung erstreckt sich die Innenschiene nur über einen Teil des Umfangs des Außenteils. Es ist insbesondere vorgesehen, dass der Radschützer zumindest zwei Innenschienen aufweist. Dabei ist eine erste Innenschiene an der Sitzstrebenbrücke angeordnet. In diesem Bereich ist die Winkelposition des Radschützers durch Verschieben veränderbar.

Im Bereich des Tretlagers, auch als Mittelbau bezeichnet, kann ebenfalls eine Innenschiene mit einem Gleitelement vorgesehen sein. In diesem Bereich ist eine Verschiebbarkeit der Winkelposition nicht erforderlich. Im Bereich des Mittelbaus kann die Anbringposition vielmehr fix sein. Möglich ist aber auch hier, dass der Radschützer zumindest um einen kleineren Winkelumfang von unter 10° über das Gleitelement verschiebbar ist, um einen Ausgleich von Form- und Lagetoleranzen vorzunehmen.

Vorzugsweise werden sowohl für die Befestigung an der Sitzstrebenbrücke als auch am Mittelbau dieselben Montageelemente verwendet, insbesondere ein Gleitelement sowie ein Halter, der mit dem Gleitelement verspannbar ist.

Vorzugsweise ist das Sicherungsmittel ohne Ausbau des Rades von oben oder unten zugänglich.

Hierzu ist insbesondere vorgesehen, dass eine Mittelachse des Sicherungsmittels in einem Winkel α von 15 bis 60°, besonders bevorzugt von 20 bis 40° zum Radschützer ausgerichtet ist. Dieser Winkel ist der Winkel einer Tangente des Radschützers an der Position des Sicherungsmittels zur Mittelachse des Sicherungsmittels, insbesondere der Schraube.

Es ist insbesondere vorgesehen, dass das Sicherungsmittel durch einen schräg stehenden Halter geführt ist.

Aufgrund der Schrägstellung ist das Sicherungsmittel im Bereich der Sitzstrebenbrücke von oben und im Bereich des Mittelbaus von unten zugänglich. Ein Ausbau des Hinterrads ist zur Montage so nicht erforderlich.

In der Sitzstrebenbrücke sowie am Mittelbar befindet sich jeweils ein Durchgangsloch, durch das das Sicherungsmittel geführt ist. Der Halter umfasst vorzugsweise ebenfalls ein Durchgangsloch.

Das Sicherungsmittel verriegelt im Gleitelement. Das Gleitelement kann hierzu insbesondere ein Innengewinde für eine Schraube umfassen.

Mit Anziehen des Sicherungsmittels wird das Gleitelement gegen den Halter verspannt und dabei gleichzeitig an der Sitzstrebenbrücke bzw. am Mittelbau fixiert.

Bei einer Weiterbildung der Erfindung umfasst das Sicherungsmittel, insbesondere die Schraube, einen Kopf mit einer konischen, insbesondere kalottenförmigen Anlagefläche. So kann das Sicherungsmittel polyaxial durchgeführt werden, wodurch ebenfalls Form- und Lagetoleranzen kompensiert werden können.

Die Anlagefläche des Durchgangslochs in der Sitzstrebenbrücke bzw. am Mittelbau ist vorzugsweise entsprechend der Form des Kopfes des Sicherungsmittels angepasst, also insbesondere auch konisch, vorzugsweise kalottenförmig ausgebildet.

Bei einer Weiterbildung der Erfindung umfasst das Fahrrad einen Gepäckträger, welcher an dem Radschützer, insbesondere an der Innenschiene des Radschützers befestigbar ist.

Der Gepäckträger kann seinerseits insofern auch der Befestigung des Radschützers dienen, indem der Halter über Streben mit dem Ausfallende verbunden wird.

Vorzugsweise wird der Gepäckträger von oben mit dem Radschützer verbunden, insbesondere mittel zumindest einer, vorzugsweise mittels einer, insbesondere mittels zwei, Schrauben, welche in einem Gewinde des Radschützers, insbesondere in einem Gewinde der Innenschiene verriegeln.

Die Erfindung betrifft des Weiteren ein Fahrrad mit einem Radschützer und einem Gepäckträger. Dieses kann insbesondere wie vorstehend beschrieben ausgebildet sein und insbesondere sämtliche im Zusammenhang mit dem Radschützer beschriebenen Merkmale umfassen.

Gemäß der Erfindung ist der Gepäckträger an einer Innenschiene des Radschützers sowie am Ausfallende des Fahrrads befestigt.

Die Innenschiene ist vorzugsweise ihrerseits zumindest mit der Sitzstrebenbrücke verbunden.

Vorzugsweise umfasst der Gepäckträger einen Sockel, durch den jeweils eine Schraube geführt ist. Der Sockel kann insbesondere jeweils als Quertraverse ausgebildet sein.

Vorzugsweise ist die Schraube jeweils zumindest in Längsrichtung polyaxial bewegbar.

Hierzu kann insbesondere ein Zwischenstück mit einem Durchgangsloch für die Schrauben vorgesehen sein, welches eine kreissegmentförmige Anlagefläche gegenüber dem Gepäckträger bildet. So können Form- und Lagetoleranzen des Gepäckträgers auf einfache Weise ausgeglichen werden.

Bei einer Ausführungsform der Erfindung sind die Streben des Gepäckträgers mit dem Ausfallende verbunden, wobei Schrauben von hinten in das Ausfallende geführt sind.

Die Rückseite des Ausfallendes umfasst also ein Gewinde, in die eine Schraube in Fahrtrichtung einführbar ist.

Die Schrauben zur Befestigung der Streben des Gepäckträgers sind so gut zugänglich. Gleichzeitig ist ein Gewinde oder Gewindeeinsatz an der Rückseite des Ausfallendes kaum sichtbar, wenn kein Gepäckträger montiert ist.

Die Erfindung betrifft des Weiteren einen Radschützer und/oder einen Gepäckträger, welcher für das vorstehend beschriebene Fahrrad ausgebildet ist.

Der Radschützer oder der Gepäckträger kann insbesondere sämtliche im Zusammenhang mit dem Radschützer oder Gepäckträger beschriebenen Merkmale aufweisen.

Der Radschützer umfasst insbesondere ein Befestigungssystem, welches das Gleitelement sowie einen Halter umfasst.

Die Mittelachse einer durch den Halter geführten Schraube steht insbesondere, wie vorstehend beschrieben, derart schräg, dass die Schraube zum Festlegen des Radschützers im Bereich der Sitzstrebenbrücke von oben und im Bereich des Mittelbaus von unten zugänglich ist.

Gemäß einem weiteren Aspekt betrifft die Erfindung einen Radschützer, insbesondere wie dieser vorstehend beschrieben wurde.

Der Radschützer umfasst ein verschiebbares Gleitelement sowie einen Halter, wobei eine Schraube, mittels der der Radschützer am Rahmen des Fahrzeugs befestigbar ist, durch den Halter geführt und im Gleitelement verriegelbar ist und wobei die Mittelachse der Schraube schräg zum Radschützer verläuft.

Insbesondere verläuft die Mittelachse der Schraube in einem von Winkel von 15-60°, vorzugsweise von 20-40° zum Radschützer.

Vorzugsweise umfasst der Radschützer zwei Halter, wobei ein erster Halter an der Sitzstrebenbrücke und ein zweiter Halter am Mittelbau befestigbar ist.

Die Schrauben sind dabei von oben und unten zugänglich, ohne, dass das Rad ausgebaut werden muss.

Die Erfindung betrifft des Weiteren eine Anordnung mit einem ersten und einem zweiten Fahrradrahmen.

Der erste Fahrradrahmen ist für eine andere Laufradgröße als der zweite Fahrradrahmen ausgebildet.

Weiter umfasst die Anordnung einen Gepäckträger, wobei der Gepäckträger mittels Streben mit dem Ausfallende sowohl des ersten als auch des zweiten Fahrradrahmens verbindbar ist, wobei ein Befestigungspunkt für eine Strebe bezogen auf die Höhe der Radachse bei dem ersten Rahmen auf einer anderen Höhe sitzt als bei dem zweiten Rahmen.

Durch die Erfindung wurde auf einfache Weise die Verwendung eines einzigen Gepäckträgers für Rahmen verschiedener Laufradgrößen ermöglicht. Mit größer werdender Laufradgröße ist an dem jeweiligen Rahmen der Befestigungspunkt an einer höheren Stelle vorgesehen. Der Gepäckträger ist so universell anpassbar und braucht nicht etwa durch Veränderung der Länge der Streben auf die jeweilige Laufradgröße angepasst zu werden.

### Kurzbeschreibung der Zeichnungen

Der Gegenstand der Erfindung soll im Folgenden anhand eines Ausführungsbeispiels bezugnehmend auf die Zeichnungen Fig. 1 bis Fig. 27 näher erläutert werden.
Fig. 1 und Fig. 2 sind perspektivische Ansichten eines erfindungsgemäßen Fahrrads.
Fig. 3 ist eine Detailansicht bei ausgeblendetem Rahmen auf die Befestigungspunkte des Radschützers an Sitzstrebenbrücke und Mittelbau.
Fig. 4 ist eine Detailansicht mit ausgeblendetem Radschützeroberteil und ausgeblendetem Laufrad.
Fig. 5 und Fig. 6 zeigen jeweils in einer Detailansicht den Befestigungspunkt am Mittelbau.
Fig. 7 zeigt in einer perspektivischen Ansicht Gleitelementhalter und Befestigungsschraube.
Fig. 8 ist eine perspektivische Ansicht der Innenschiene des Radschützers.
Fig. 9 ist eine weitere Detailansicht des Montagepunktes an der Sitzstrebenbrücke.
Fig. 10 ist eine Detailansicht des Bereichs des Gepäckträgers.
Fig. 11 zeigt in einer Detailansicht das Ausfallende von hinten.
Fig. 12 und Fig. 13 zeigen in einer Seitenansicht Details des Befestigungspunkts am Ausfallende.
Fig. 14 zeigt die Schiene sowie die Zwischenstücke zur Montage des Gepäckträgers.
Fig. 15 ist eine Detailansicht des Zwischenstücks nebst Schraube.
Fig. 16 ist eine Detailansicht des Gepäckträgers von unten.
Fig. 17 ist eine Detailansicht des hinteren Bereichs des Rahmens.
Fig. 18 ist eine Detailansicht des Rahmens im Bereich des Mittelbaus.
Fig. 19 ist ein Querschnitt und Fig. 20 ein Längsschnitt im Bereich eines Montagepunktes, insbesondere im Bereich der Sitzstrebenbrücke.
Fig. 20a dient der Erläuterung des Winkels, in welchem die Montageschrauben für den Radschützer zugänglich sind.
Fig. 21 bis Fig. 25 zeigen alternative Ausführungsformen der Erfindung.

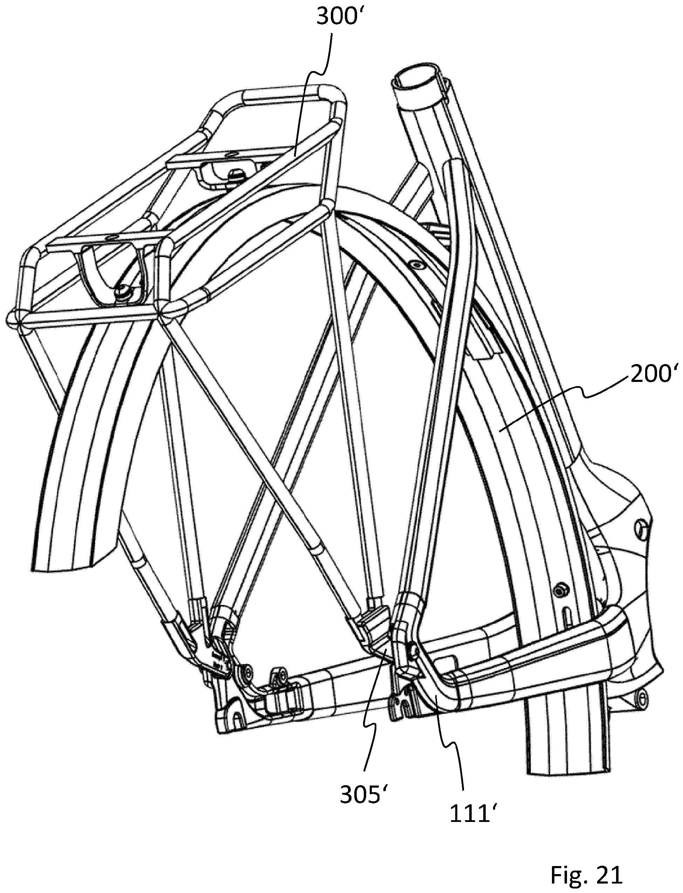

   In Fig. 21 ist eine alternative Befestigungsposition der Streben des Gepäckträgers dargestellt.

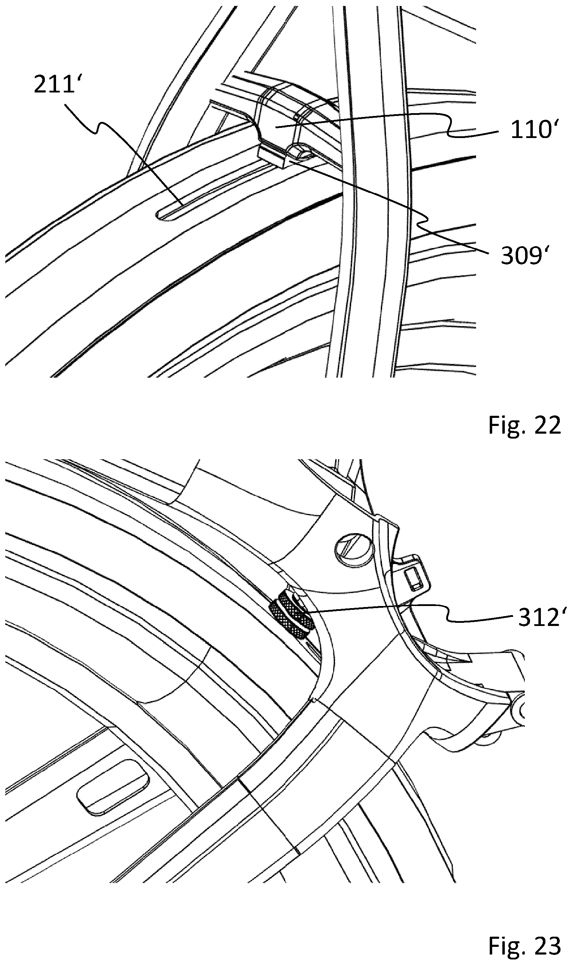

Fig. 22 zeigt ein alternativ verwendbares Gleitelement.
Fig. 23 zeigt eine alternative Befestigung im Bereich des Mittelbaus.

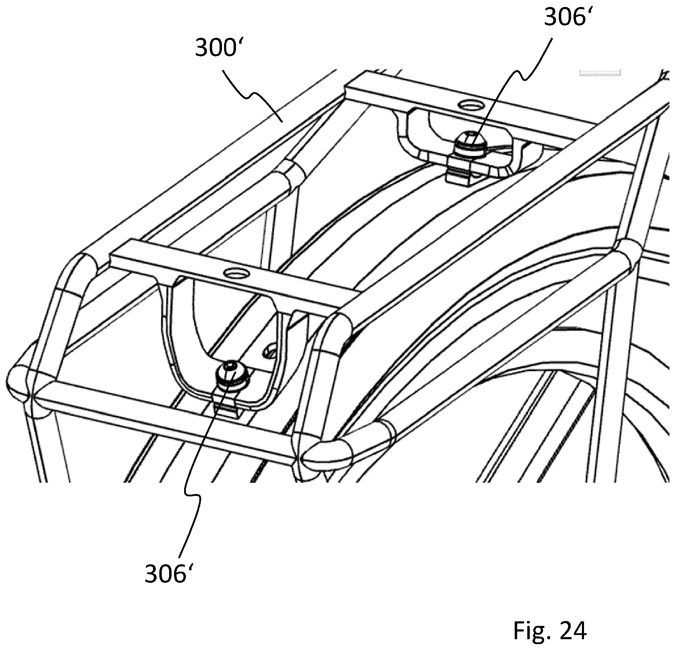

Fig. 24 zeigt eine alternative Befestigungsmöglichkeit des Gepäckträgers am Radschützer.

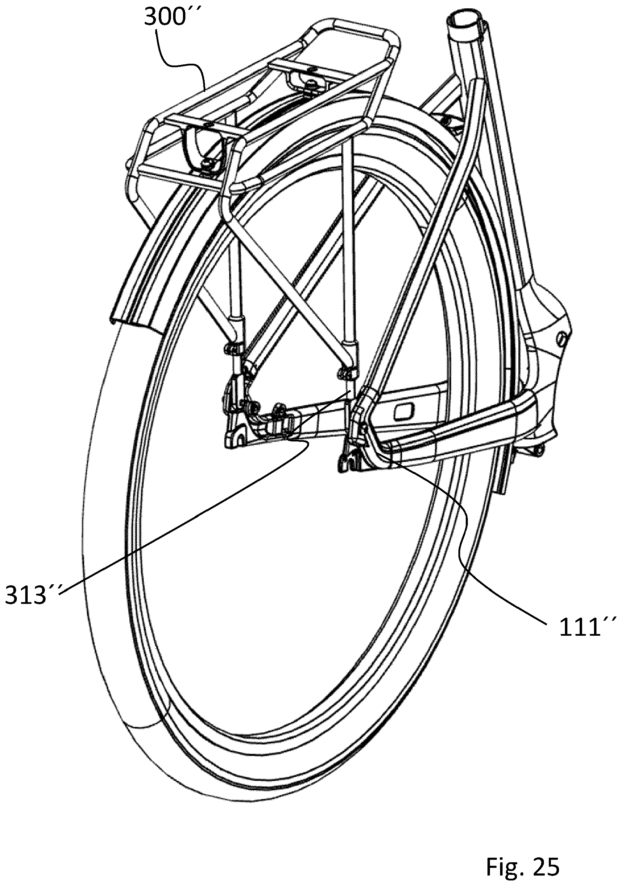

Fig. 25 zeigt eine alternative Ausführungsform eines Gepäckträgers mit einstellbaren Streben.

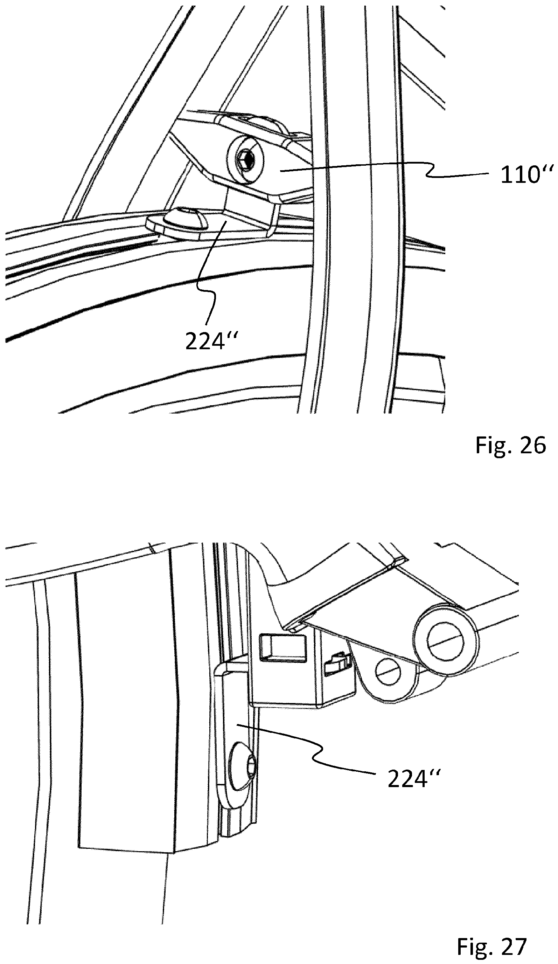

Fig. 26 und Fig. 27 sind Detailansichten einer alternativen Befestigung des Radschützers an der Sitzstrebenbrücke sowie am Mittelbau unter Verwendung eines Winkelstücks.

### Detaillierte Beschreibung der Zeichnungen

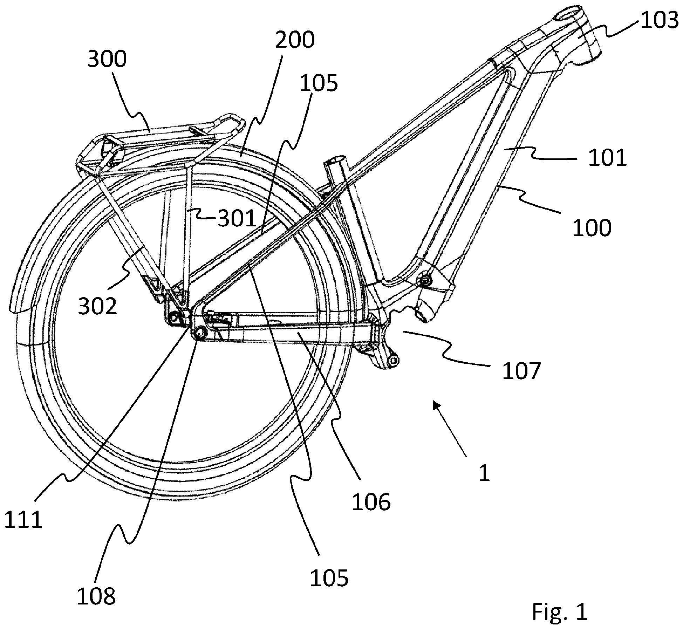

Fig. 1 zeigt in einer perspektivischen Ansicht ein Ausführungsbeispiel eines Fahrrads 1, wobei lediglich die für die Erfindung relevanten Komponenten dargestellt sind.

Das Fahrrad 1 umfasst einen Rahmen 100 mit einem Unterrohr 101, einem Oberrohr 102, einem Steuerrohr 103 und einem Sitzrohr 104.

Die Sitzstreben 105 sowie die Kettenstreben 106 laufen zum Ausfallende 111.

Der Mittelbau 107 dient in diesem Ausführungsbeispiel der Aufnahme eines Mittelmotors nebst Tretlager (nicht dargestellt).

Das Hinterrad des Fahrrads 1 ist mit einem Radschützer 200 versehen. Weiter befindet sich auf dem Radschützer 200 ein Gepäckträger 300.

Der Radschützer 200 verläuft vom Mittelbau 107 ausgehend unter dem Gepäckträger 300 hindurch bis zur Rückseite des Fahrrads 1.

Der Gepäckträger 300 ist über vordere Streben 301 und hintere Streben 302 mit dem Ausfallende 111 verbunden.

Die Streben 301 und 302 laufen einem gemeinsamen Befestigungspunkt am Ausfallende 101 zusammen.

Der Befestigungspunkt befindet sich in diesem Ausführungsbeispiel oberhalb der Durchführung 108 für die Radachse.

Da der Gepäckträger 300 mit dem Radschützer 200 verbunden ist, dienen die Streben 301, 302 gleichzeitig der Befestigung des Radschützers 200.

Sofern kein Gepäckträger 300 verbaut werden soll, können die Streben 301, 302 in geeignet abgewandelter Bauweise auch direkt mit dem Radschützer 200 verbunden sein (nicht dargestellt).

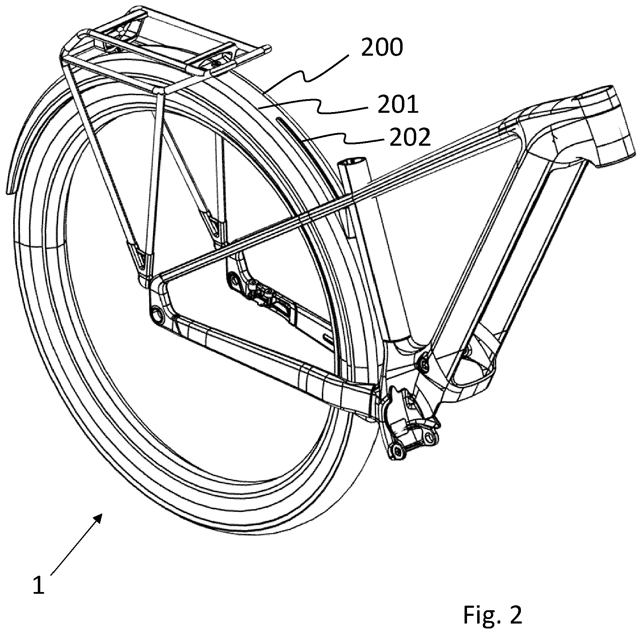

Fig. 2 ist eine weitere perspektivische Ansicht des Fahrrads 1.

In dieser perspektivischen Ansicht ist zu erkennen, dass der Radschützer 200 ein Außenteil 201 mit einem Langloch 202 aufweist. Über das Langloch 202 ist die Winkelposition des Radschützers gegenüber der Sitzstrebenbrücke veränderbar.

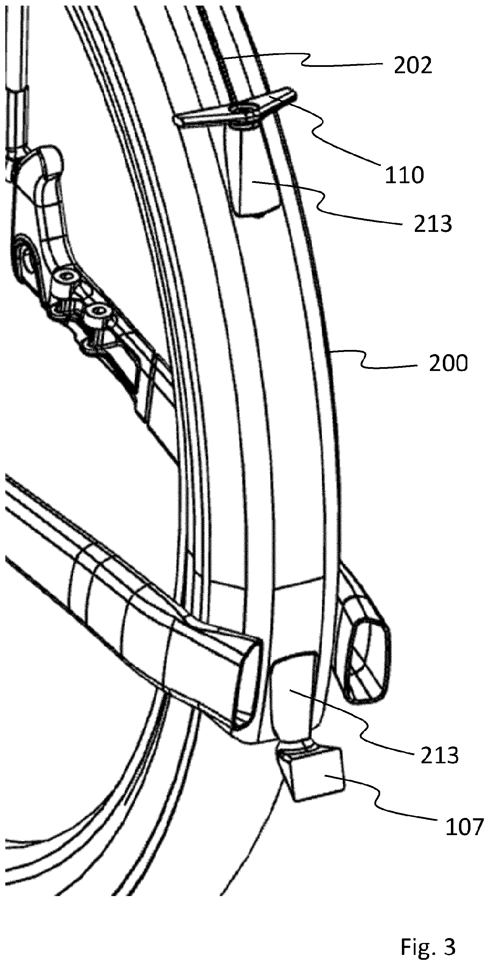

Fig. 3 zeigt in einer Detaildarstellung die Befestigungspunkte des Radschützers 200 bei ausgeblendetem Sitzrohr und ausgeblendeten Sitzstreben.

Der Radschützer 200 ist über einen Halter 213 zum einen an der Sitzstrebenbrücke 110 befestigt.

Der Halter 213 ist entlang des Langlochs 202 verschiebbar.

Im Bereich des Mittelbaus ist ebenfalls ein Halter 213 vorgesehen, welcher in umgekehrter Position mit dem Mittelbau 107, genauer gesagt mit einem Befestigungsfortsatz des Mittelbaus 107, verbunden ist.

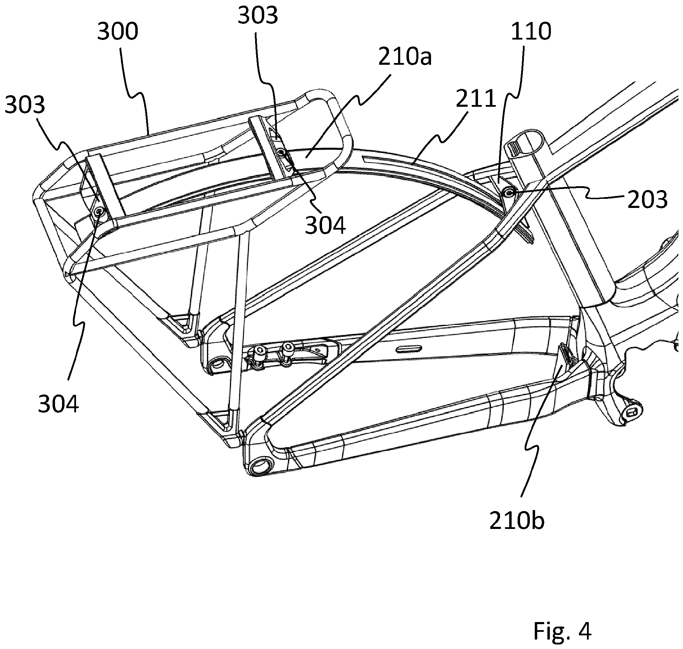

Fig. 4 ist eine Detaildarstellung, wobei nunmehr das Außenteil des Radschützers sowie das Hinterrad ausgeblendet ist.

Der Radschützer umfasst in diesem Ausführungsbeispiel zwei Innenschienen 210a, 210b.

Eine Innenschiene 210a ist an der Sitzstrebenbrücke 110 befestigt und erstreckt sich unter dem Gepäckträger 300 hindurch.

Die Innenschiene 210a kann aus Metall oder Kunststoff ausgebildet sein. Insbesondere kann die Innenschiene 210a mit dem Außenteil des Radschützers verbunden, z.B. verklebt oder umspritzt, sein.

Die Innenschiene 210a umfasst eine Nut 211, über die Winkelposition der Innenschiene 210a an der Sitzstrebenbrücke und damit des Radschützers veränderbar ist. Eine durch ein Durchgangsloch der Sitzstrebenbrücke 110 greifende Schraube 203 ist von oben zugänglich und kann festgezogen werden, um den Radschützer zu fixieren.

Der Gepäckträger 300 umfasst Querstreben 303, welche ein Durchgangsloch aufweisen, durch das jeweils eine Schraube 304 geführt ist.

Die Schrauben 304 greifen in ein Gewinde der Innenschiene 210a und verbinden so Gepäckträger 300 und Radschützer.

Zur Befestigung des Radschützers am Mittelbau ist eine weitere, kürzere Innenschiene 210b vorgesehen.

In einer anderen Ausführungsform kann auch eine einzige Innenschiene vorhanden sein, das Teilstück 210b würde in diesem Ausführungsbeispiel in das Teilstück 210a übergehen (nicht dargestellt).

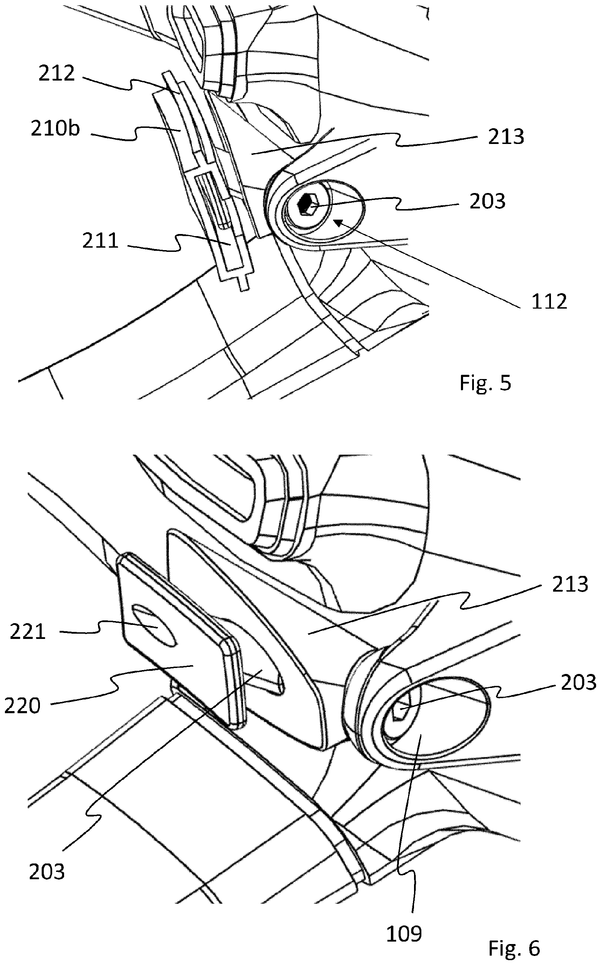

Fig. 5 ist eine Detailansicht von unten auf den Befestigungspunkt 112 am Mittelbau.

Die Schiene 210b umfasst eine T-förmige Nut 211.

Die Innenschiene 210b kann seitlich herausragende Flügel 212 umfassen. Diese können aus Versteifungselement dienen oder zur Verbindung mit dem Außenteil des Radschützers ausgebildet sein, z.B. durch Einclipsen oder Umspritzen.

Mittels der von unten zugänglichen Schraube 211 kann der Halter 213 befestigt und dabei gleichzeitig der Radschützer festgelegt werden.

In der perspektivischen Ansicht gemäß Fig. 6 ist die Innenschiene ausgeblendet.

Zu erkennen ist nunmehr das Gleitelement 220, welches in der Innenschiene sitzt. Das Gleitelement 220 umfasst ein Gewinde 221, in welches die Schraube 203 geführt ist.

Hierzu ist die Schraube 203 in ein Durchgangsloch 109 des Mittelbaus eingeführt. Über die Schraube 203 wird der Halter 213 gegen das Gleitelement 220 verspannt. So kann der Radschützer festgelegt werden.

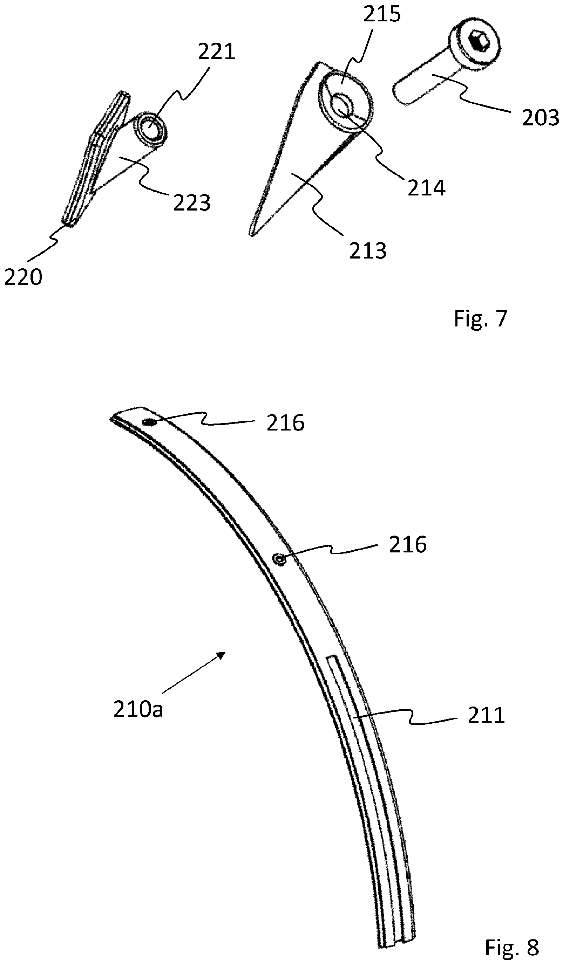

Fig. 7 zeigt in einer perspektivischen Ansicht die Befestigungskomponenten Gleitelement 220, Halter 213 und Schraube 203.

Gleitelement 220 umfasst eine Platte mit einem sich schräg von der Platte erstreckenden Fortsatz 223 mit dem Gewinde 221.

Auf der gegenüberliegenden Seite wird der Halter 213 angebracht. Dieser umfasst ein Durchgangsloch 214. Der Halter 213 hat eine in der Seitenansicht in etwa dreieckige Kontur.

Das Durchgangsloch 214 steht entsprechend zum Fortsatz 223 und zu Schraube schräg.

Im montierten Zustand ragt der Fortsatz 223 des Gleitelements 220 in den Halter 213 hinein.

Die Anlagefläche 215 für den Kopf der Schraube 203 ist konisch, insbesondere kalottenförmig, ausgebildet.

Fig. 8 ist eine perspektivische Ansicht der Innenschiene 210a.

Neben der innenliegenden T-förmigen Nut 211 umfasst die Innenschiene zwei Gewinde 216, welche der Montage des Gepäckträgers dienen. Der Abstand der Gewinde 216 ist fix.

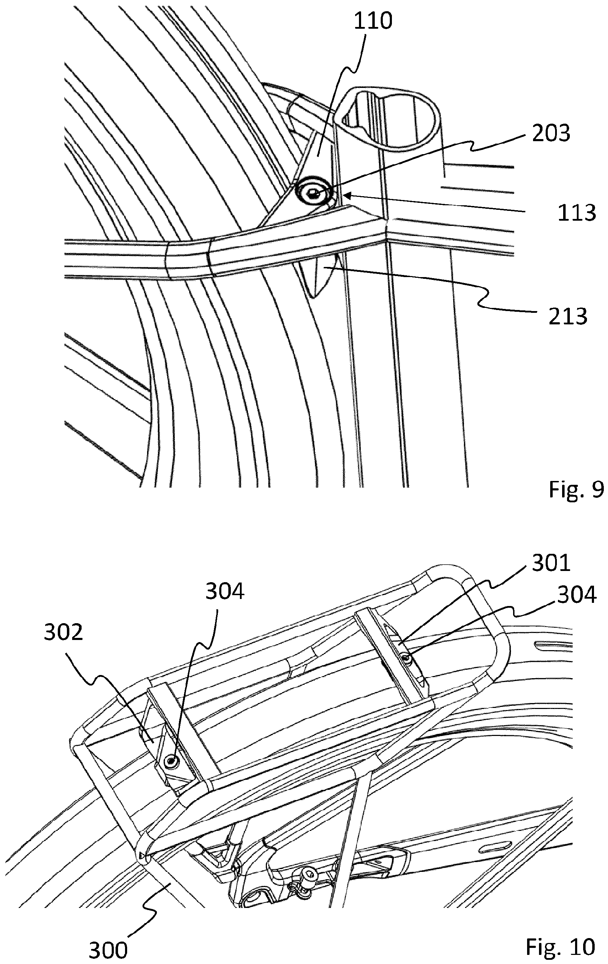

Fig. 9 ist eine Detailansicht des Befestigungspunktes 113 im Bereich der Sitzstrebenbrücke 110. Über die von oben zugängliche Schraube 203 kann der Halter 213 gegen das Gleitelement gespannt werden und so der Radschützer in seiner endgültigen Montageposition an der Sitzstrebenbrücke 110 fixiert werden.

Fig. 10 ist eine Detailansicht im Bereich des Gepäckträgers 300.

Der Gepäckträger 300 wird über die Schrauben 304, welche durch die vordere Strebe 301 und die hintere Strebe 302 geführt sind, mit der Innenschiene (210a) des Radschützers verbunden.

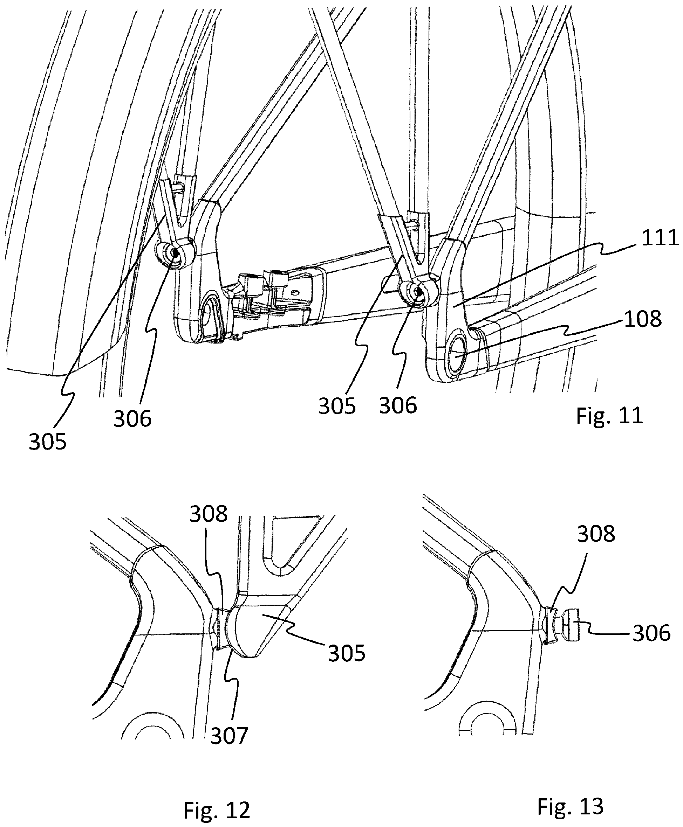

Fig. 11 ist eine Detaildarstellung des Ausfallendes 111 in einer Ansicht von hinten.

Die Streben des Gepäckträgers laufen jeweils an einem Verbindungsstück 305 zusammen.

Das Verbindungsstück 305 umfasst an seinem unteren Ende ein Durchgangsloch für die Schrauben 306.

Die Schrauben 306 sind von hinten in das Ausfallende 111 geführt.

Je nach dem, für welche Laufradgröße der Rahmen ausgebildet ist, kann der Befestigungspunkt für die Schrauben 306 auf unterschiedlicher Höhe in Bezug auf die Durchführung 108 für die Radachse liegen.

So lässt sich ein einziger Gepäckträger universell für Rahmen für verschiedene Laufradgrößen verwenden.

Fig. 12 ist eine Detailansicht des Bereichs des Ausfallendes von der Seite.

In dieser Detailansicht zu erkennen ist, dass sich zwischen dem Verbindungsstück 305 und dem Ausfallende ein Zwischenstück 308 befindet. Das Verbindungsstück 305 hat eine abgerundete, insbesondere teilkreisförmige, Anlagefläche 307, wodurch es in seiner Winkelposition gegenüber dem Zwischenstück 308 und damit gegenüber dem Ausfallende veränderbar ist.

In der Detailansicht gemäß Fig. 13 ist das Verbindungsstück ausgeblendet.

Zu erkennen ist, dass auch das Zwischenstück 308 eine abgerundete, insbesondere teilkreisförmige, Anlagefläche aufweist.

Auch der Kopf der Schraube 306 ist konisch, insbesondere kalottenförmig, ausgebildet und sitzt in einer komplementär ausgebildeten Ausnehmung des Verbindungsstücks.

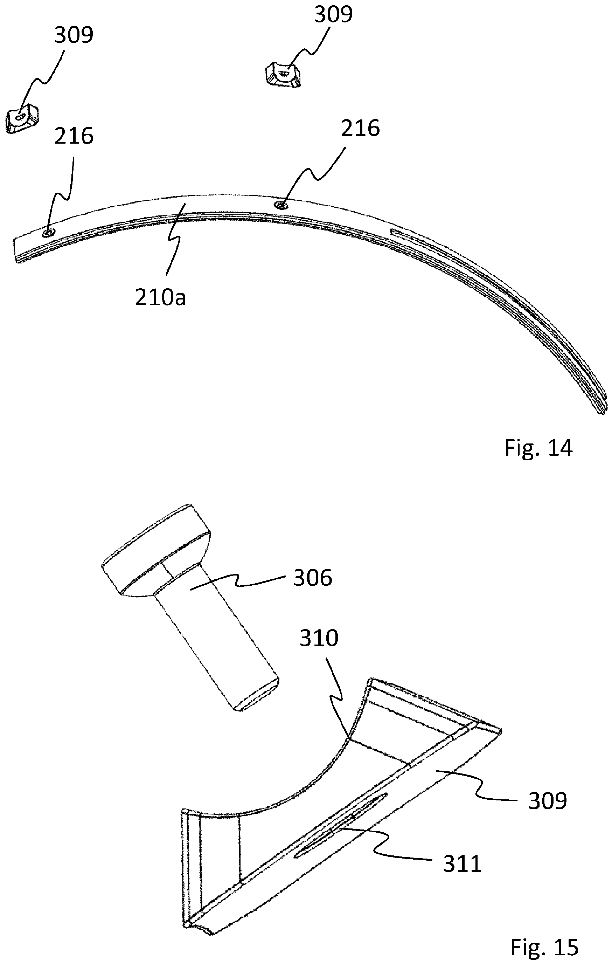

Wie in Fig. 14 dargestellt, werden auch für die Montage des Gepäckträgers Zwischenstücke 309 verwendet, welche unter den Streben des Gepäckträgers angeordnet sind und auf dem Radschützer sitzen.

Die Befestigungsschrauben werden durch die Zwischenstücke 309 geführt und verriegeln in den Gewinden 216 der Innenschiene 210a.

Fig. 15 ist eine Detaildarstellung eines solchen Zwischenstücks 309.

Das Zwischenstück 309 umfasst eine in der Seitenansicht teilkreisförmige Anlagefläche 310 sowie ein Durchgangsloch 311 für die Schraube 306.

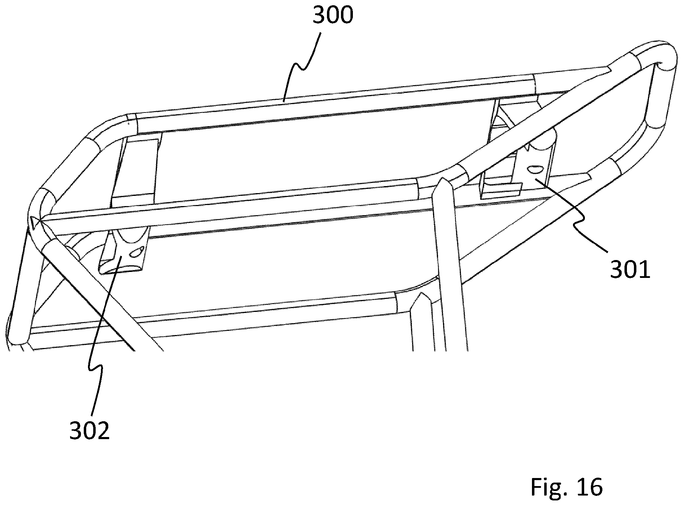

Wie in der Detailansicht auf den Gepäckträger von unten gemäß Fig. 16 dargestellt, haben die Streben 301, 302 des Gepäckträgers 300 eine abgerundete, insbesondere teilkreisförmige Kontur, wodurch gegenüber dem im Fig. 15 dargestellten Zwischenstück (309) eine Winkelanpassung ermöglicht wird.

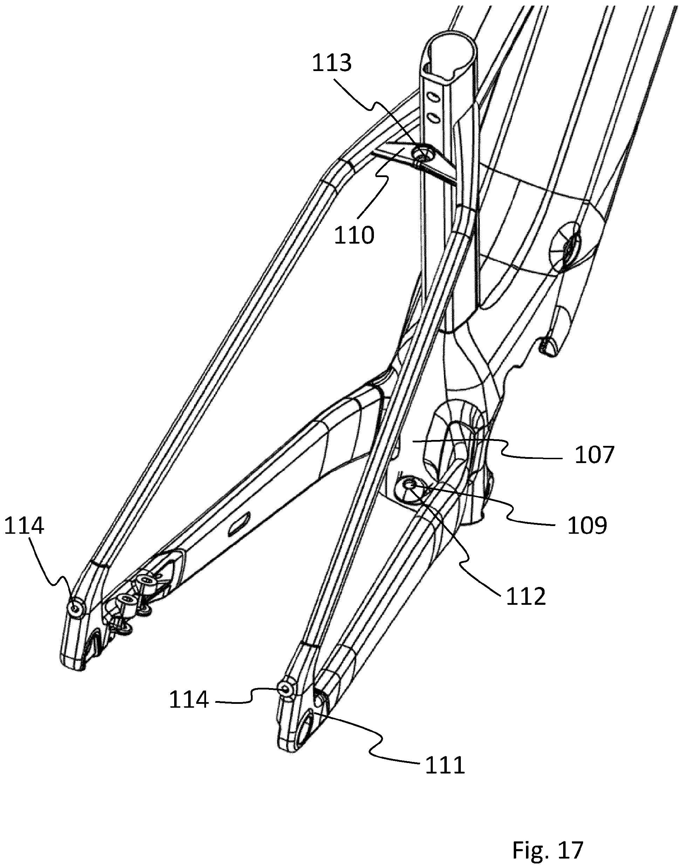

Fig. 17 ist eine Detailansicht des Rahmens 100.

An der Sitzstrebenbrücke 110 ist ein erster Befestigungspunkt 113 für eine Schraube vorgesehen. Der Befestigungspunkt hat ein Durchgangsloch, welches eine abgerundete, insbesondere kalottenförmige, Anlagefläche umfassen kann.

Der Befestigungspunkt 112 am Mittelbau 107 umfasst ein Durchgangsloch 109.

Am Ausfallende 111 sind rückseitig Befestigungspunkte 114 vorgesehen, welche als Innengewinde ausgebildet sind. Hier werden die Streben des Gepäckträgers, bzw. das Verbindungsstück (305) der Streben befestigt.

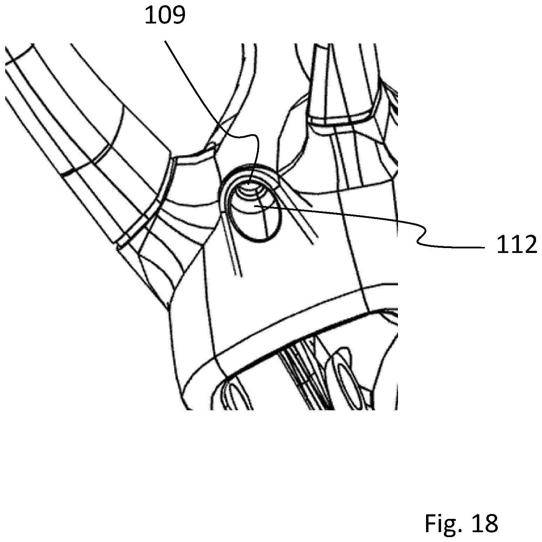

Fig. 18 ist eine Detailansicht auf den Befestigungspunkt 112 am Mittelbau.

Auch am Befestigungspunkt 112 ist ein Durchgangsloch 109 vorgesehen. Dieses kann eine konische, insbesondere kalottenförmige, Anlagefläche umfassen.

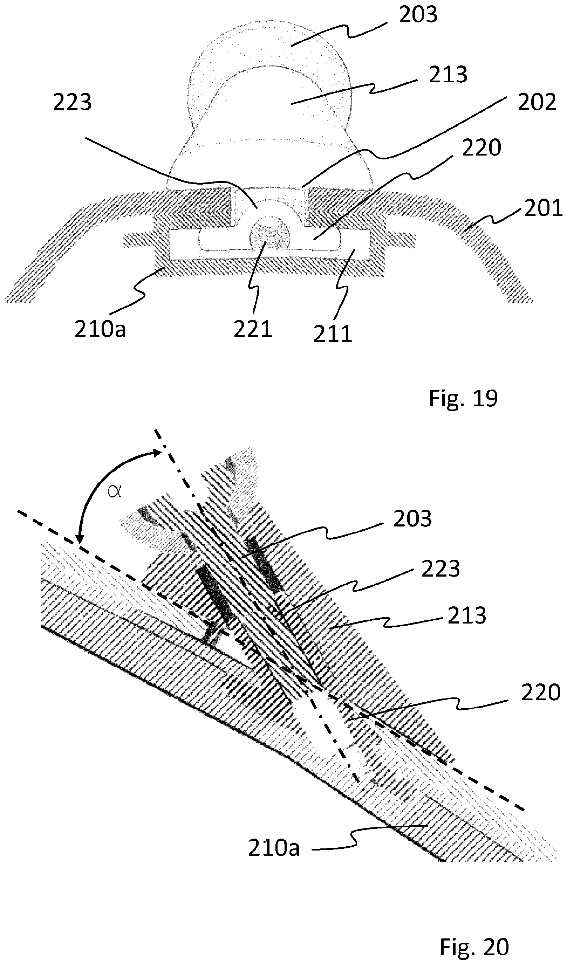

Fig. 19 ist ein Querschnitt im Bereich der Innenschiene 210a mit dem Gleitelement 220.

Die Innenschiene 210a sitzt unter dem Außenteil 210 des Radschützers.

In der T-förmigen Nut 211 sitzt das Gleitelement 220, welches ein Gewinde 221 umfasst.

Die Schraube 203 ist durch den Halter 213 geführt und in dem Gewinde 221 verriegelt.

Der Fortsatz 223 mit dem Gewinde 221 ragt durch den Schlitz der Innenschiene 210a sowie durch das Langloch 202 des Außenteils 201.

So kann der Halter 213 gegenüber dem Gleitelement 220 verspannt werden und fixiert die Innenschiene 210a nebst Außenteil 201 und damit den Radschützer.

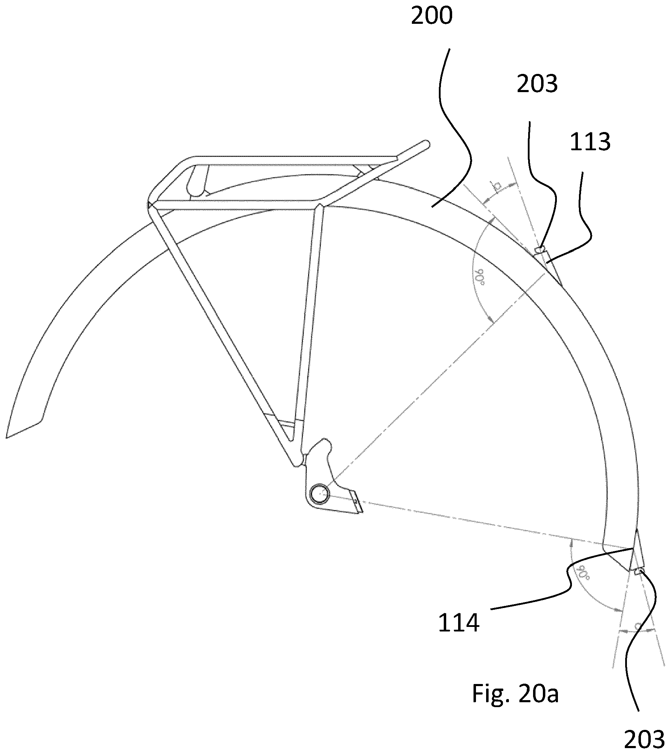

Wie in dem Längsschnitt gemäß Fig. 20 dargestellt, ist die Schraube zunächst durch den Halter 213 und sodann in den Fortsatz 223 des Gleitelements 220 geführt.

Die Mittelachse der Schraube 203 verläuft dabei in Bezug auf den Radschützer (Tangente) in einem Winkel α von 20 bis 40°.

So wird ermöglicht, dass die Schraube 203 in der Montageposition an der Sitzstrebenbrücke von oben zugänglich ist.

Entsprechende umgekehrt ist in der Montageposition am Mittelbau die Schraube 203 von unten zugänglich.

Bezug nehmend auf Fig. 20a soll die Bestimmung des Winkels α am Befestigungspunkt 113 an der Sitzstrebenbrücke sowie am Befestigungspunkt 114 am Mittelbau näher erläutert werden.

Die Tangente des Radschützers 200 verläuft senkrecht zu einer zur Radachse führenden Geraden. Der Winkel α ist jeweils ein spitzer Winkel zwischen der Mittelachse der Schraube 203 und entspricht dem Winkel eines Werkzeugs zum Festziehen der Schraube 203.

Aufgrund des spitzen Winkels ist die eine Schraube 203 am Befestigungspunkt 113 an der Sitzstrebenbrücke von oben und die andere Schraube 203 am Befestigungspunkt 114 am Mittelbau von unten zugänglich, ohne dass hierfür das Hinterrad ausgebaut werden muss.

Fig. 21 zeigt in einer perspektivischen Ansicht eine alternative Ausführungsform eines Fahrrads mit einem Radschützer 200' und einem Gepäckträger 300'.

Das Verbindungsstück des Gepäckträgers 300` ist in diesem Ausführungsbeispiel mit der Innenseite des Ausfallendes 111' verbunden. Die entsprechende Befestigungsschraube ist von der Außenseite zugänglich.

Wie in Fig. 22 in einer Detaildarstellung dargestellt, ist auch die Montage an der Sitzstrebenbrücke 110' anders ausgeführt. Im Radschützer befindet sich ebenfalls eine Nut 211 `.

Ein Zwischenstück 309` ist winkelveränderlich an der Sitzstrebenbrücke 110' angebracht.

Im Unterschied zu dem vorstehend beschriebenen Ausführungsbeispiel erfolgt hiermit die Fixierung von innen, es wird also eine Schraube von unten durch die Nut 211 des Radschützers geführt.

Wie in der Detailansicht gemäß Fig. 23 zu erkennen, ist auch die Montage am Befestigungspunkt des Mittelbaus anders ausgeführt. Verwendet wird zum Fixieren des Radschützers eine Rändelschraube 312', welche von der Seite zugänglich ist.

Wie in der Detailansicht gemäß Fig. 24 dargestellt, ist der Gepäckträger 300' mittels von oben zugänglicher Schrauben 306' montiert.

Fig. 25 zeigt eine weitere alternative Ausführungsform der Erfindung.

Bei dieser Ausführungsform der Erfindung umfasst der Gepäckträger 300'' ein teleskopartig verlängerbares Endstück 313'', über die er an die Befestigungsposition am Ausfallende 111' angepasst werden kann.

Wie in der Detailansicht gemäß Fig. 26 dargestellt, wird für die Montage an der Sitzstrebenbrücke 110'' ein Winkelstück 224'' verwendet.

Das Winkelstück 224" ist über eine Montageschraube mit dem Radschützer, insbesondere an der Innenschiene des Radschützers verbunden.

Eine andere Schraube greift in die Sitzstrebenbrücke 110''.

Wie in Fig. 27 dargestellt, ist der Radschützer auch am Mittelbau mittels eines Winkelstücks 224'' befestigt.

Durch die Erfindung konnte die Montage von Radschützern und optional Gepäckträger vereinfacht werden.

### Bezugszeichenliste

- 1: Fahrrad
- 100: Rahmen
- 101: Unterrohr
- 102: Oberrohr
- 103: Steuerrohr
- 104: Sitzrohr
- 105: Sitzstrebe
- 106: Kettenstrebe
- 107: Mittelbau
- 108: Durchführung Radachse
- 109: Durchgangsloch Mittelbau
- 110: Sitzstrebenbrücke
- 111: Ausfallende
- 112: Befestigungspunkt Mittelbau
- 113: Befestigungspunkt Sitzstrebenbrücke
- 114: Befestigungspunkt Ausfallende
- 200: Radschützer
- 201: Außenteil
- 202: Langloch
- 210a, b: Innenschiene
- 211: Nut
- 212: Flügel
- 213: Halter
- 214: Durchgangsloch
- 215: Anlagefläche
- 216: Gewinde
- 220: Gleitelement
- 221: Gewinde
- 223: Fortsatz
- 224": Winkelstück
- 300: Gepäckträger
- 301: vordere Strebe
- 302: hintere Strebe
- 303: Querstrebe
- 304: Schraube
- 305: Verbindungsstück
- 306: Schraube
- 307: Anlagefläche
- 308: Zwischenstück
- 309: Zwischenstück
- 310: Anlagefläche
- 311: Durchgangsloch
- 312': Rändelschraube
- 313": verstellbares Endstück

## Patentansprüche

1. Fahrrad mit einem Radschützer, wobei der Radschützer eine Nut aufweist, in der ein mit dem Rahmen verbundenes Gleitelement verschiebbar angeordnet ist, wobei das Gleitelement durch Anziehen eines Sicherungsmittels, insbesondere einer Schraube, in der Nut festlegbar ist.

2. Fahrrad nach dem vorstehenden Anspruch, **dadurch gekennzeichnet, dass** der Radschützer zumindest an einer Sitzstrebenbrücke mittels des Gleitelements festlegbar ist.

3. Fahrrad nach einem der vorstehenden Ansprüche, **dadurch gekennzeichnet, dass** der Radschützer eine Innenschiene umfasst, in welcher die Nut angeordnet ist,
und/oder dass die Nut T-förmig ausgebildet ist.

4. Fahrrad nach einem der vorstehenden Ansprüche, **dadurch gekennzeichnet, dass** das Sicherungsmittel ohne Ausbau des Rades von oben oder unten zugänglich ist.

5. Fahrrad nach einem der vorstehenden Ansprüche, **dadurch gekennzeichnet, dass** eine Mittelachse des Sicherungsmittels in einem Winkel α von 15-60°, vorzugsweise von 20-40°, zum Radschützer ausgerichtet ist.

6. Fahrrad nach einem der vorstehenden Ansprüche, **dadurch gekennzeichnet, dass** das Sicherungsmittel in einen Halter greift, der mittels des Sicherungsmittels auf das Gleitelement zubewegbar ist.

7. Fahrrad nach einem der vorstehenden Ansprüche, **dadurch gekennzeichnet, dass** das Sicherungsmittel einen Kopf mit einer konischen Anlagefläche umfasst.

8. Fahrrad nach einem der vorstehenden Ansprüche, weiter umfassend einen Gepäckträger, welcher an dem Radschützer, insbesondere an der Innenschiene des Radschützers, befestigt ist.

9. Fahrrad nach dem vorstehenden Anspruch, **dadurch gekennzeichnet, dass** der Gepäckträger über Streben mit dem Ausfallende des Fahrrads verbunden ist.

10. Fahrrad mit einem Radschützer und einem Gepäckträger, wobei der Gepäckträger an einer Innenschiene des Radschützers sowie an dem Ausfallende des Fahrrads befestigt ist.

11. Fahrrad nach dem vorstehenden Anspruch, **dadurch gekennzeichnet, dass** der Gepäckträger mittels zumindest einer, insbesondere zwei, von oben zugänglichen Schrauben mit der Innenschiene verbunden ist, wobei die Schrauben in einen Sockel greifen, auf dem die Schraube zumindest in Längsrichtung polyaxial beweglich aufliegt.

12. Fahrrad nach einem der beiden vorstehenden Ansprüche, **dadurch gekennzeichnet, dass** der Gepäckträger Streben aufweist, welche mittels Schrauben mit dem Ausfallende verbunden sind, wobei die Schrauben von hinten in das Ausfallende geführt sind.

13. Radschützer und/oder Gepäckträger, ausgebildet für ein Fahrrad nach einem der vorstehenden Ansprüche.

14. Radschützer, insbesondere nach dem vorstehenden Anspruch, umfassend ein verschiebbares Gleitelement sowie einen Halter, wobei eine Schraube, mittels der der Radschützer am Rahmen des Fahrzeugs befestigbar ist, durch den Halter geführt und im Gleitelement verriegelbar ist, wobei die Mittelachse der Schraube schräg zum Radschützer verläuft, insbesondere in einem von Winkel α von 15-60°, vorzugsweise von 20-40°.

15. Anordnung mit einem ersten und einen zweiten Fahrradrahmen, wobei der erste Fahrradrahmen für eine andere Laufradgröße als der zweite Fahrradrahmen ausgebildet ist,
sowie einem Gepäckträger, wobei der Gepäckträger mittels Streben mit dem Ausfallende sowohl des ersten als auch des zweiten Fahrradrahmens verbindbar ist,
wobei ein Befestigungspunkt für eine Strebe bezogen auf die Höhe der Radachse bei dem ersten Rahmen auf einer anderen Höhe sitzt als bei dem zweiten Rahmen.
